# EUROPÄISCHE PATENTSCHRIFT

(11) **EP 2 233 765 B1**
(45) Veröffentlichungstag und Bekanntmachung des Hinweises auf die Patenterteilung: **24.09.2014**
(21) Anmeldenummer: 10157284.0
(22) Anmeldetag: 23.03.2010
(51) Int. Cl.: F16J 3/04

(54) **Druckmittelantrieb mit einer Schutzhülle**
Fluid pressure operating means with a protective cover
Système de commande actionné par un fluide sous pression doté d'une enveloppe de protection

(30) Priorität: 24.03.2009 DE 102009001779
(43) Veröffentlichungstag der Anmeldung: 29.09.2010
(73) Patentinhaber: ZF Friedrichshafen AG, 88038 Friedrichshafen (DE)
(72) Erfinder: Gebauer, Dieter, 97502 Obbach (DE); Tulaczko, Boleslaw, 97453 Schonungen (DE)

(56) Entgegenhaltungen:
- EP-A2- 1 512 882
- EP-B1- 1 315 915
- DE-A1- 10 320 004
- DE-A1- 19 542 513
- FR-A1- 2 244 931
- GB-A- 2 138 521

## Beschreibung

Die Erfindung betrifft einen Druckmittelantrieb, insbesondere einen Hydraulikzylinder, gemäß dem Oberbegriff des Patentanspruchs 1.

Ein solcher Druckmittelantrieb wird beispielsweise zur Einleitung einer Ausrückbewegung auf einen Ausrücker einer Kraftfahrzeugreibungskupplung benutzt. Ein gattungsgemäßer Druckmittelantrieb ist bereits aus der DE 195 16 392 C2 bekannt, wobei dort ein Gleitschutz relativ zu einer Kolbenstange eines Hydraulikzylinders bewegbar an einer Schutzhülle aufgenommen ist, welche die Kolbenstange zumindest auf einem Teil ihrer Länge umschließt. Der Gleitschutz ist formschlüssig in einer am Ausrückelement ausgebildeten Tasche aufgenommen und wird an dieser Position durch die Kolbenstange in Anlage gehalten. Dadurch wird erreicht, dass der zwischen dem Gleitschutz und der Kolbenstange ausgebildete Reibbereich innerhalb des durch die Schutzhülle und den Gleitschutz staubdicht umschlossenen Raumes liegt.

Ein weiterer Druckmittelantrieb, der dem vorstehend erläuterten ähnelt, ist in der EP 1 315 915 B1 offenbart. Dort ist ein Kupplungsnehmerzylinder gezeigt, dessen Kolbenstange von einem Faltenbalg umschlossen ist. Dieser Faltenbalg ist einerseits and dem Zylindergehäuse und andererseits an einer als Gleitschutz fungierenden Deckkappe angeordnet, die den Faltenbalg abschließt und eine Reibstelle mit der Kolbenstange ausbildet. Der Faltenbalg ist zusätzlich zwischen seinen Enden an einer Stelle an der Kolbenstange festgelegt.

Die DE 103 20 004 A1 zeigt einen weiteren Druckmittelantrieb. Eine Kolbenstange greift hierbei mit einem kugelförmig ausgeführten Ende verliersicher in einen Gleitschutz ein, der wiederum an einem Ausrückelement angeordnet ist. Die Kolbenstange greift dabei mit einem kugelförmig ausgeführten Ende verliersicher in den Gleitschutz ein. An dem Gleitschutz ist weiterhin eine Schutzhülle ausgebildet, die die Reibstelle zwischen Kolbenstange und Gleitschutz abdichtet. Zur sicheren Abdichtung der Reibstelle ist die Schutzhülle zur axialen Positionssicherung hinter einer Randwulst verliersicher angeordnet. Zudem weist der Druckmittelantrieb eine weitere Schutzhülle auf, die den Innenraum des Druckmittelantriebs, sowie einen Teil der Kolbenstange vor Schmutz schützt.

Von diesem Stand der Technik ausgehend, stellt sich die Erfindung die Aufgabe, einen demgegenüber im vereinfachten Druckmittelantrieb bereitzustellen, der das Eindringen von Staub an einer an der Kolbenstange ausgebildeten Reibstelle sicher verhindert.

Die Erfindung löst die Aufgabe mit einem die Merkmale des Patentanspruchs 1 aufweisenden Druckmittelantrieb.

Es wird somit ein vorzugsweise als Hydraulikzylinder ausgebildeter Druckmittelantrieb vorgeschlagen mit einer axial beweglichen Kolbenstange, die zumindest auf einem Teil ihrer Länge von einer ersten Schutzhülle umschlossen ist, welche mit einem Ende an dem Druckmittelantrieb festgelegt ist und wobei die Kolbenstange mit ihrem freien Ende an einem schwenkbeweglich angeordneten Ausrückelement angreift. Gemäß der Erfindung ist dabei vorgesehen, eine Reibstelle zwischen der Kolbenstange und dem Ausrückelement auszubilden und die erste Schutzhülle mit dem anderen Ende außerhalb der Reibstelle an der Kolbenstange festzulegen. Die Reibstelle selbst wird dabei von einer zweiten Schutzhülle umgeben, welche mit einem Ende an der Kolbenstange festgelegt ist und mit dem anderen Ende vorgespannt an dem Ausrückelement anliegt.

Vorteilhafte Ausgestaltungen und Weiterbildungen der Erfindung sind in den abhängigen Ansprüchen angegeben.

Im Nachfolgenden wird die Erfindung mit Bezug auf die anliegenden Figuren näher erläutert. Es zeigen:

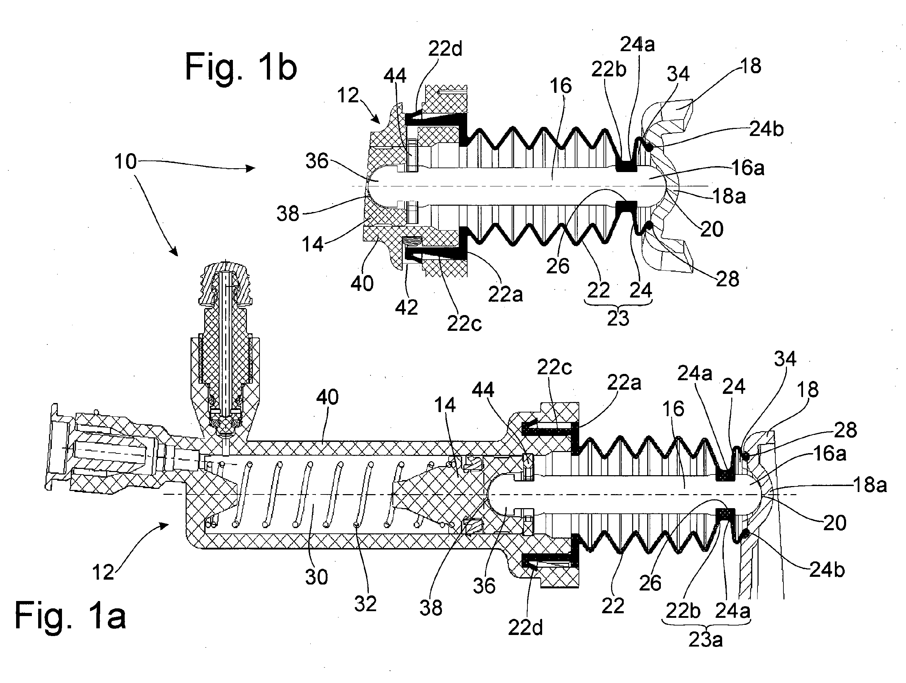

- Fig. 1 a: ein als hydraulischer Nehmerzylinder ausgebildeter Druckmittelantrieb mit einem damit in Wirkverbindung stehenden Ausrückorgan in einer Schnittdarstellung;
- Fig. 1 b: ein Ausschnitt aus Fig. 1 a in einer davon abweichenden Schnittlage.

Die Fig. 1a, b zeigen einen Druckmittelantrieb 10 für eine Kraftfahrzeugreibungskupplung, der einen hydraulischen Nehmerzylinder 12 mit einem Kolben 14 und einer daran angeordneten, axial beweglichen Kolbenstange 16 umfasst, welche mit ihrem freien Ende an einem innerhalb der Darstellungsebene schwenkbeweglich angeordneten Ausrückelement 18 angreift. Dazu ist an der Kolbenstange 16 eine Kalotte 16a ausgebildet, welche zur Bildung eines Kugelgelenks in eine an dem Ausrückelement 18 eingebrachte Kugelpfanne 18a eingreift und dort unter Ausbildung einer Reibstelle 20 anliegt. Das Ausrückelement 18 ist als Kupplungshebel aus einem hochfesten und temperaturbeständigen Kunststoff oder aus einem tiefgezogenen oder geschmiedeten Metallteil hergestellt.

Bei der Betätigung der Reibungskupplung wird durch einen eingeleiteten hydraulischen Druck der Kolben 14 mit der Kolbenstange 16 bis zur Erreichung einer Endlage aus dem Zylinder 12 herausgeschoben. An der Kontaktstelle zwischen der Kolbenstange 16 und dem Ausrückelement 18, d.h. der Reibstelle 20, wird diese Axialbewegung in eine Schwenkbewegung des Ausrückelements 18 umgesetzt.

Der Hydraulikzylinder 14 weist weiterhin einen Faltenbalg 22 als eine erste elastische Schutzhülle auf, die die Kolbenstange 16 auf einem Teil ihrer Länge ummantelt. Dieser Faltenbalg 22 ist mit einem Ende 22a an dem Nehmerzylinder 12 und mit dem anderen Ende 22b außerhalb der Reibstelle 20 an der Kolbenstange 16 festgelegt, so dass dadurch die Kolbenstange 16 und der Innenraum des Druckmittelzylinders 12 gegenüber dem Eintritt von Staub, Abrieb und sonstigen Schmutz abdichtet sind.

Die Reibstelle 20 selbst ist von einer, ebenfalls als Faltenbalg ausgeführten, elastischen zweiten Schutzhülle 24 umgeben. Diese Schutzhülle 24 ist einerseits mit einem, in deren Endbereich vorgesehenem Anlageabschnitt 24a an einer Ringnut 26 der Kolbenstange 16 festgelegt, weiche im Ausführungsbeispiel in einem unmittelbar an die Kalotte 16a anschließenden Bereich ausgebildet ist. Die Schutzhülle 24 greift mit deren anderen Ende mit einem Wulst 24b in eine an dem Ausrückelement 18 vorgesehene kreisförmige Nut 28 ein.

Innerhalb des Kolbendruckraums 30 ist eine Druckfeder 32 angeordnet, wodurch zunächst der Kolben 14 mit der Kolbenstange 16 und damit gleichfalls die Ringwulst 24b der zweiten Schutzhülle 24 eine permanente Vorspannung zur Anlage an dem Ausrückelement 18 erfahren, so dass ein Anlagekontakt der Schutzhülle 24 auch bei einer gegenseitigen Verkippung von Kolbenstange 16 und Ausrückelement 18 stets gewährleistet ist.

Es ist in den Figuren sichtbar, dass die beiden Schutzhüllen 22, 24 als ein gemeinsames Teil 23 ausgeführt sind und sich einen an der Kolbenstange 16 anliegenden Anlageabschnitt 23a teilen, welcher die Abschnitte 22b, 24a stofflich vereint. Innerhalb der zweiten Schutzhülle 24 ist ein Schmierstoffreservoir 34, z.B. in Form einer Fettfüllung, eingebracht, wodurch die Reibstelle 20 zur Verschleißreduzierung über deren gesamte vorgesehene Lebensdauer geschmiert wird. Es ist dabei auch möglich, dass das durch die Ringwulst 24b gebildete Ende der zweiten Schutzhülle 24 durch eine hier zeichnerisch nicht dargestellte dünnwandige Membran zu verschließen und die dadurch gebildete Kammer vor der Montage mit einem Schmiermittel zu füllen. Im am Fahrzeug verbauten Zustand des Druckmittelantriebs 10 wird durch die zwischen dem Stößel 16 und dem Kupplungshebel 18 wirkende hohe Anlagekraft die Membran durchrieben, wodurch das Schmiermittel schließlich in die Reibstelle 20 eindringen kann.

Die Kolbenstange 16 ist druckmittelzylinderseitig ebenfalls mit einer Kugelkalotte 36 ausgeführt, welche in einer am Kolben 14 ausgebildeten Kugelpfanne 38 gelagert ist. Zur axialen Bewegungsbegrenzung des Kolbens 14 innerhalb eines Zylindergehäuses 40 ist durch einen am Zylindergehäuse 40 ausgeführten Radialschlitz 42 ein Sicherungsbügel 44 eingeführt und dort festgelegt. In Fig. 1a ist erkennbar, dass die erste Schutzhülle 22 an deren am Nehmerzylinder 12 festgelegten Ende eine verlängerten Kragen 22c aufweist, welcher die schlitzförmige Gehäuseöffnung 42 axial übergreift und den Nehmerzylinder 12 gegenüber äußeren Verunreinigungen abdichtet. Zur unverlierbaren Anordnung der Schutzhülle 22 weist der Kragen 22c einen radial abstehenden Rand 22d auf, der bei der Montage der Schutzhülle 22 in einer Haltekontur des Zylindergehäuses 40 verrastet.

### Bezugszeichenliste

- 10: Druckmittelantrieb
- 12: Nehmerzylinder
- 14: Kolben
- 16: Kolbenstange
- 16a: Kalotte
- 18: Ausrückelement
- 18a: Kugelpfanne
- 20: Reibstelle
- 22: erste Schutzhülle
- 22a,b: Endbereich
- 22c: Kragen
- 22d: Radialrand
- 23: Schutzhülle, umfassend 22, 24
- 24: zweite Schutzhülle
- 24a, b: Endbereich
- 26: Ringnut
- 28: Nut
- 30: Koibendruckraum
- 32: Druckfeder
- 34: Schmierstoffreservoir
- 36: Kugelkalotte
- 38: Kugelpfanne
- 40: Zylindergehäuse
- 42: Schlitz
- 44: Sicherungsbügel

## Patentansprüche

1. Druckmittelantrieb (10), vorzugsweise Hydraulikzylinder (12), mit einer axial beweglichen Kolbenstange (16), die zumindest auf einem Teil ihrer Länge von einer ersten Schutzhülle (22) umschlossen ist, welche mit einem Ende (22a) an dem Druckmittelantrieb (10) festgelegt ist und wobei die Kolbenstange (16) mit ihrem freien Ende an einem schwenkbeweglich angeordneten Ausrückelement (18) angreift,
**dadurch gekennzeichnet,**
**dass** die Kolbenstange (16) eine Reibstelle (20) mit dem Ausrückelement (18) ausbildet und dass die erste Schutzhülle (22) mit dem anderen Ende (22b) auβerhalb der Reibstelle (20) an der Kolbenstange (16) festgelegt ist und dass die Reibstelle (20) von einer zweiten Schutzhülle (24) umgeben ist, welche mit einem Ende (24a) an der Kolbenstange (16) festgelegt ist und mit dem anderen Ende (24b) vorgespannt an dem Ausrückelement (18) anliegt.

2. Druckmittelantrieb nach Anspruch 1,
**dadurch gekennzeichnet, dass** die zweite Schutzhülle (24) mit einem Wulst (24b) in eine an dem Ausrückelement (18) vorgesehene Nut (28) eingreift.

3. Druckmittelantrieb nach Anspruch 1 oder 2,
**dadurch gekennzeichnet, dass** die erste und die zweite Schutzhülle (22, 24) als ein gemeinsames Teil (23) ausgeführt sind.

4. Druckmittelantrieb nach einem der Ansprüche 1 - 3,
**dadurch gekennzeichnet, dass** die zweite Schutzhülle (24) ein Schmierstoffreservoir (34) beinhaltet.

5. Druckmittelantrieb nach Anspruch 4,
**dadurch gekennzeichnet, dass** das mit dem Ausrückelement (18) in Anlage stehende Ende (24b) der zweiten Schutzhülle (24) durch eine Membran verschlossen ist.

6. Druckmittelantrieb nach einem der Ansprüche 1 - 5,
**dadurch gekennzeichnet, dass** die erste Schutzhülle (22) mit deren am Druckmittelantrieb (10) festgelegten Ende (22a) eine Gehäuseöffnung (42) des Druckmittelantriebs (10) axial übergreift.

## Claims

1. Pneumatic operating mechanism (10), preferably hydraulic cylinder (12), having an axially movable piston rod (16) which is enclosed at least on part of its length by a first protective cover (22) which is fixed with one end (22a) on the pneumatic operating mechanism (10), and the piston rod (16) acting with its free end on a disengagement element (18) which is arranged pivotably movably, **characterized in that** the piston rod (16) forms a friction point (20) with the disengagement element (18), and **in that** the first protective cover (22) is fixed with the other end (22b) outside the friction point (20) on the piston rod (16), and **in that** the friction point (20) is surrounded by a second protective cover (24) which is fixed with one end (24a) on the piston rod (16) and bears with the other end (24b) against the disengagement element (18) in a prestressed manner.

2. Pneumatic operating mechanism according to Claim 1, **characterized in that** the second protective cover (24) engages with a bead (24b) into a groove (28) which is provided on the disengagement element (18).

3. Pneumatic operating mechanism according to Claim 1 or 2, **characterized in that** the first and the second protective cover (22, 24) are configured as one common part (23).

4. Pneumatic operating mechanism according to one of Claims 1 to 3, **characterized in that** the second protective cover (24) contains a lubricant reservoir (34).

5. Pneumatic operating mechanism according to Claim 4, **characterized in that** that end (24b) of the second protective cover (24) which is in contact with the disengagement element (18) is closed by a diaphragm.

6. Pneumatic operating mechanism according to one of Claims 1 to 5, **characterized in that** the first protective cover (22) reaches axially over a housing opening (42) of the pneumatic operating mechanism (10) with its end (22a) which is fixed on the pneumatic operating mechanism (10).

## Revendications

1. Système de commande actionné par un fluide sous pression (10), de préférence cylindre hydraulique (12), comprenant une tige de piston déplaçable axialement (16) qui est entourée, au moins sur une partie de sa longueur, par une première enveloppe de protection (22), laquelle est fixée par une extrémité (22a) au système de commande actionné par un fluide sous pression (10), et la tige de piston (16) s'engageant par son extrémité libre avec un élément de débrayage (18) disposé de manière mobile en pivotement,
**caractérisé**
**en ce que** la tige de piston (16) forme un point de friction (20) avec l'élément de débrayage (18), et en ce que la première enveloppe de protection (22) est fixée, par l'autre extrémité (22b), à la tige de piston (16) à l'extérieur du point de friction (20), et en ce que le point de friction (20) est entouré par une deuxième enveloppe de protection (24), laquelle est fixée par une première extrémité (24a) à la tige de piston (16) et s'applique, par l'autre extrémité (24b), de manière précontrainte contre l'élément de débrayage (18).

2. Système de commande actionné par un fluide sous pression selon la revendication 1,
**caractérisé en ce que** la deuxième enveloppe de protection (24) vient en prise à l'aide d'un bourrelet (24b) dans une rainure (28) prévue sur l'élément de débrayage (18).

3. Système de commande actionné par un fluide sous pression selon la revendication 1 ou 2, **caractérisé en ce que** la première et la deuxième enveloppe de protection (22, 24) sont réalisées sous la forme d'une pièce commune (23).

4. Système de commande actionné par un fluide sous pression selon l'une quelconque des revendications 1 à 3,
**caractérisé en ce que** la deuxième enveloppe de protection (24) comprend un réservoir de lubrifiant (34).

5. Système de commande actionné par un fluide sous pression selon la revendication 4,
**caractérisé en ce que** l'extrémité (24b) de la deuxième enveloppe de protection (24) en appui contre l'élément de débrayage (18) est fermée par une membrane.

6. Système de commande actionné par un fluide sous pression selon l'une quelconque des revendications 1 à 5,
**caractérisé en ce que** la première enveloppe de protection (22) chevauche axialement, par son extrémité (22a) fixée au système de commande actionné par un fluide sous pression (10), une ouverture de boîtier (42) du système de commande actionné par un fluide sous pression (10).
